**Europäisches Patentamt**

**European Patent Office**

**Office européen des brevets**

(19)

(11) Veröffentlichungsnummer : **0 367 891 B1**

(12) # EUROPÄISCHE PATENTSCHRIFT

(45) Veröffentlichungstag der Patentschrift :
29.04.92 Patentblatt 92/18

(21) Anmeldenummer : **89102656.9**

(22) Anmeldetag : **16.02.89**

(51) Int. Cl.⁵ : **A01D 34/68**

(54) **Handrasenmäher.**

(30) Priorität : **07.11.88 US 270480**

(43) Veröffentlichungstag der Anmeldung :
**16.05.90 Patentblatt 90/20**

(45) Bekanntmachung des Hinweises auf die
Patenterteilung :
**29.04.92 Patentblatt 92/18**

(84) Benannte Vertragsstaaten :
**DE FR GB SE**

(56) Entgegenhaltungen :
**EP-A- 0 304 903**
**GB-A- 1 363 341**

(73) Patentinhaber : **DEERE & COMPANY**
**1 John Deere Road**
**Moline, Illinois 61265 (US)**

(72) Erfinder : **Bowditch, Hoel L.**
**2 Water Street**
**Foxboro Massachusetts 02035 (US)**

(74) Vertreter : **Feldmann, Bernhard et al**
**DEERE & COMPANY European Office, Patent**
**Department Steubenstrasse 36-42 Postfach**
**503**
**W-6800 Mannheim 1 (DE)**

## Beschreibung

Die Erfindung bezieht sich auf einen Handrasenmäher mit einem sich auf Laufrädern abstützenden Gehäuse, wobei mindestens ein in einem Rahmen montiertes Laufrad frei um eine zu seiner Radachse senkrecht stehende Achse pendeln kann.

Unter Handrasenmähern werden in der Regel solche Rasenmäher verstanden, die keine antreibbaren Lauffräder aufweisen und von einer Bedienungsperson geschoben werden. Hier unterscheidet man hinsichtlich der Laufräder zwei Arten, und zwar solche, die mit Pendelrädern ausgerüstet sind und von denen die Erfindung ausgeht (US-A-4 558 558, US-A-3 152 431). Hier sind die Pendelräder (eins oder zwei) meist frontseitig angebaut, während die rückwärtigen Laufräder starr, d. h. unverschwenkbar, gelagert sind. Die zweite Art, die Lauffräder anzuordnen, besteht darin, alle Laufräder starr und damit nicht pendelnd zu lagern (US-A-4 224 785). Beide Anbauarten haben für den gewünschten Einsatz Vor- und Nachteile.

Unsere EP-A-0304903, die einen Stand der Technik nach Artikel 54 (3) EPÜ darstellt, beschreibt einen Handrasenmäher mit einer sich auf Laufrädern abstützenden Gehäuse, wobei mindestens ein in einem Rahmen (90, 92) montiertes Laufrad frei um eine zu der Radachse senkrecht stehende Achse pendeln kann.

In den Fig. 3 und 4 dieses Dokumentes ist die Befestigungsachse eines solchen Laufrades strichliert dargestellt. Die Befestigungsachse, die nicht mit der Achse, um die das Laufrad pendeln kann, identisch ist, wird über eine Mutter gesichert.

Die mit der Erfindung zu lösende Aufgabe wird darin gesehen, den Handrasenmäher in einfacher Weise sowohl für den Einsatz mit Pendelrädern als auch für den Einsatz mit unverschwenkbaren Laufrädern auszubilden. Diese Aufgabe ist nach der Erfindung dadurch gelöst worden, daß der mit der senkrecht stehenden Achse fest verbundene Rahmen einen Auslegerarm aufweist, der feststellbar ist. Auf diese Weise kann der Handrasenmäher in kürzester Zeit von Pendelrad- auf Nichtpendelradbetrieb umgestellt werden, so daß die Vorteile beider Systeme je nach Bedarf von der Bedienungsperson genutzt werden können.

Ohne Teile an- oder abbauen zu müssen, kann die Umrüstung sekundenschnell vorgenommen werden, wenn erfindungsgemäß in einem die senkrecht stehende Achse aufnehmenden Rahmenteil ein verstellbares Feststellelement angeordnet ist, das mit dem Auslegerarm verbindbar ist. Zweckmäßig kann dabei das Feststellelement unter der Wirkung einer Feder in seine den Auslegerarm feststellende Position verstellbar sein.

Im einzelnen kann das Feststellelement als Feststellbolzen mit Handgriff ausgebildet sein, der in eine in dem Auslegerarm vorgesehene Bohrung unter der Wirkung der Feder einrastbar und mit seinem Handgriff auf einer mit dem Rahmenteil verbundenen schrägen Nockenfläche mit Ausnehmungen geführt ist. Hierdurch braucht die Bedienungsperson den Handgriff nur zu verschwenken, der dann den Feststellbolzen aufgrund seines Gleitens auf der schrägen Nockenfläche aus der Bohrung im Auslegerarm zieht bzw. unter der Wirkung der Feder einrasten läßt. Beiden Stellungen sind die Ausnehmungen zugeordnet, so daß eine ungewollte Umrüstung ausgeschlossen ist.

Die gegen Pendeln feststellbaren Laufräder lassen sich auch leicht entfernen und gegen unverschwenkbare Laufräder ersetzen, wenn jeder Rahmenteil über einen Verbindungsteil mit dem Gehäuse verbindbar ist, wobei jeder Rahmenteil mit einer eine Achse aufnehmenden Öffnung versehen ist, an seinem dem Laufrad abgelegenen Ende mit dem Verbindungsteil verbunden ist und gegen ein unverschwenkbares und auf die Achse aufsetzbares Laufrad austauschbar ist.

Zweckmäßig kann darüber hinaus jeder Verbindungsteil an seinem dem Rahmenteil abgelegenen Ende mit einem einenends offenen, U-förmigen Schlitz zur Aufnahme einer Radachse versehen sein, wobei die den Schlitz aufnehmende Radachse mit einer Nut versehen ist.

In der Zeichnung sind zwei nachfolgend näher erläuterte Ausführungsbeispiele der Erfindung dargestellt. Es zeigt:

Fig. 1 einen Handrasenmäher mit vier unverschwenkbar gelagerten Rädern,

Fig. 2 einen Handrasenmäher mit zwei unverschwenkbar gelagerten rückwärtigen Laufrädern und zwei vorderen verschwenkbar gelagerten Rädern, teilweise in auseinandergezogener Darstellung,

Fig. 3 einen umgerüsteten Handrasenmäher mit parallel verstelltem Gehäuse,

Fig. 4 eine ähnliche Darstellung wie in Fig. 3, wobei sich jedoch der Stellmechanismus an der Vorderseite des Gehäuses in einer Position befindet, daß die Vorderkante des Gehäuses am weitesten nach unten abgesenkt ist,

Fig. 5 einen Schnitt entlang der Linie 5 - 5 gemäß Fig. 4,

Fig. 6 eine ähnliche Ausführungsform wie Fig. 2, jedoch modifiziert,

Fig. 7 die Ausführungsform nach Fig. 6 in Seitenansicht,

Fig. 8 eine Draufsicht in Richtung der Pfeile 8 - 8 in Fig. 7 und

Fig. 9 eine feststellbare Pendelradaufhängung, teilweise im Schnitt.

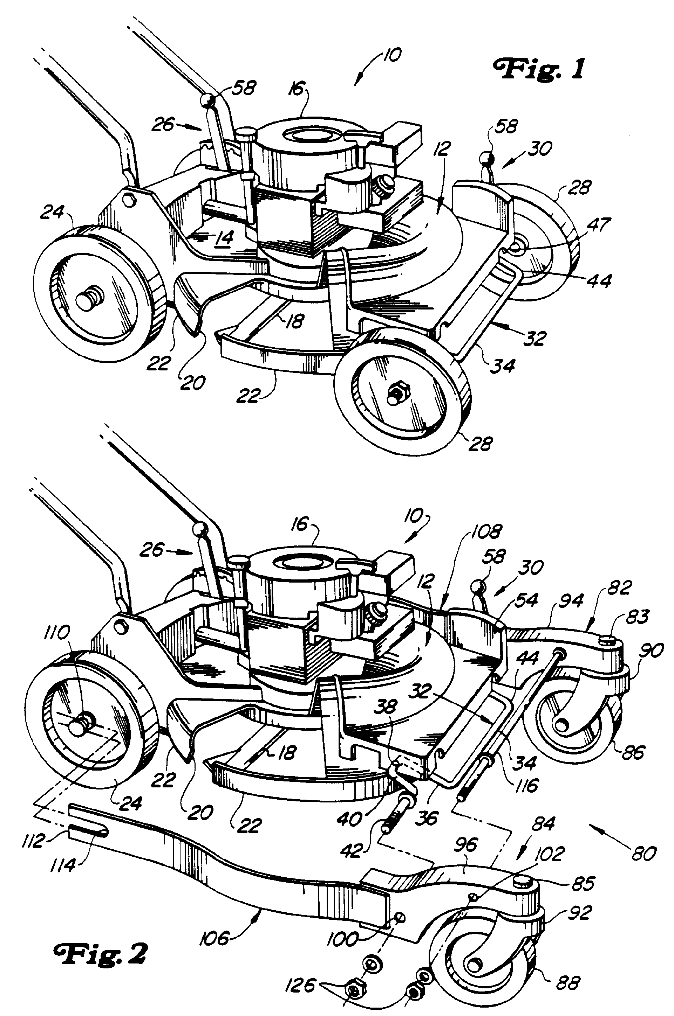

In Fig. 1 ist ein repräsentativer Handrasenmäher 10 mit unverschwenkbaren Laufrädern 24 und 28 dargestellt, der ein Gehäuse 12 für ein umlaufendes Messer 18 und einen Oberteil 14 aufweist, auf dem ein Motor 16 mit einer vertikalen Welle angeordnet ist, die das Mähmesser 18 aufnimmt. Das herkömmliche Gehäuse 12 weist einen Schurz 20 auf, der die Bewegungsbahn des Mähmessers 18 abdeckt und der mit einer unteren Kante 22 versehen ist, die unterhalb der Bewegungsbahn des Messers liegt. Das Gehäuse 12 selbst ist, wie aus Fig. 1 hervorgeht, auf zwei rückwärtigen unverschwenkbar gelagerten Laufrädern 24 angeordnet, die über eine Einstellvorrichtung 26 verstellt werden können, sowie auf zwei vorderen unverschwenkbar angeordneten Laufrädern 28, die über eine Einstellvorrichtung 30 höhenverstellt werden können. Beide Einstellvorrichtungen sind herkömmlicher Art, und eine ins einzelne gehende Beschreibung scheint nicht erforderlich zu sein.

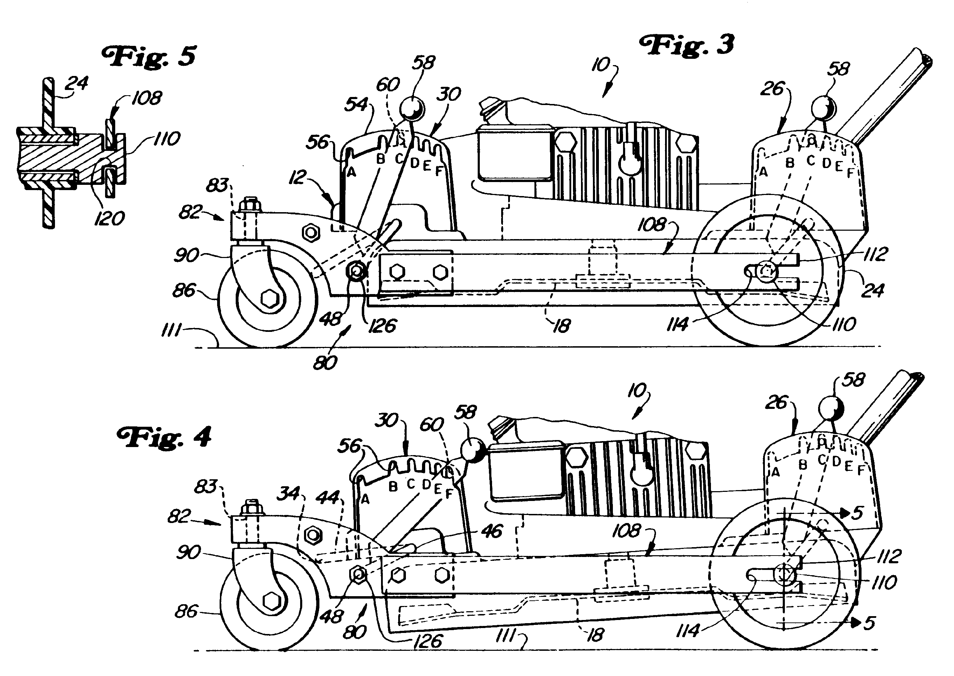

Wie aus den Figuren 1 und 2 hervorgeht, ist zum Befestigen der unverschwenkbaren vorderen Laufräder 28 und für die Vertikalverstellung eine stangenförmige Achse 32 mit einem mittigen U-förmigen Teil 34, der einen rechten Schenkel 36 aufweist, der mit dem anderen Ende eines quer verlaufenden Befestigungsteils 38 verbunden ist, der sich wiederum an das äußere Ende eines Kurbelteils 40 anschließt, vorgesehen. Der Kurbelteil 40 hat einen nach außen gebogenen Endteil 42, auf dem das rechte vordere Laufrad drehbar gelagert ist. In ähnlicher Weise weist der U-Teil 34 einen linken Schenkel 44 auf, der mit dem hinteren Ende eines quer verlaufenden Befestigungsteils 46 verbunden ist, dessen äußeres Ende wiederum mit einem Kurbelteil 47 in Verbindung steht. Auch der Kurbelteil 47 hat einen nach außen gebogenen Endteil 48 (Fig. 3 und 4), an dem das linke vordere Laufrad drehbar angeordnet ist. Die Befestigungsteile 38 und 46 der Achse 32 sind axial zueinander ausgerichtet und über in der Zeichnung nicht dargestellte rechte und linke Laschen mit dem Gehäuse schwenkbar verbunden.

Wie am besten aus den Figuren 3 und 4 zu ersehen ist, weist die Einstellvorrichtung 30 einen vertikalen, segmentartig ausgebildeten Ansatz 54, der zu der linken Frontseite des Gehäuses 12 gehört, und eine Vielzahl von zueinander Abstand aufweisenden Rasternuten 56 auf, die bogenförmig an der äußeren Oberfläche angeordnet sind. An die Achse 32 greift in dem Bereich, in dem sich der Befestigungsteil 46 und der Kurbelteil 47 treffen, ein Hebel 58 an, der vorzugsweise federnd ausgebildet ist und einen Zapfen 60 aufnimmt, der in eine der Rasternuten 56 eingreifen kann und damit die Achse 32 in verschiedenen Winkelpositionen feststellen kann. Auf diese Weise können die Laufräder 28 in verschiedenen Vertikalpositionen mit Bezug auf das Gehäuse eingestellt werden. Eine derartige Verstellung der vorderen Laufräder 28 wird natürlich nicht ohne eine Verstellung der rückwärtigen Laufräder durchgeführt, damit die Schnitthöhe des Mähmessers 18 richtig eingestellt werden kann. Im einzelnen wird das Mähmesser 18 seine höchste Schnitthöhe einnehmen, wenn der Hebel 58 die mit A gekennzeichnete Position einnimmt. Die Schnitthöhe des Mähmessers nimmt ab, wenn der Hebel im Uhrzeigerdrehsinn in eine andere Endstellung, die mit F bezeichnet ist, verschwenkt wird. Der U-Teil 34 der Achse 32 dient zusätzlich als Sicherheitsbügel, der verhindert, daß ein Fuß der Bedienungsperson zu nah an das vordere Ende des Gehäuses und damit eventuell in Kontakt mit dem Mähmesser kommt. Einzelheiten einer solchen Konstruktion sind in dem Dokument US-A-4 224 785 ersichtlich.

Beim vorliegenden Ausführungsbeispiel ist die Erfindung an einem Handrasenmäher dargestellt, der die vorstehend beschriebene Frontachse aufweist. Selbstverständlich kann die Erfindung auch an anderen Handrasenmähern angewendet werden, wobei eine Höhenverstellung nicht unbedingt sein muß und es auch durchaus denkbar ist, daß sich der Rasenmäher nur auf drei Laufrädern, beispielsweise einem vorderen und zwei rückwärtigen, abstützt.

Die Manövrierfähigkeit eines derartigen Handrasenmähers, der vier unverschwenkbare Laufräder aufweist, ist natürlich nicht groß, und über die erfindungsgemäße Umrüstung wird eine bessere Manövrierfähigkeit erreicht, so daß Kurven von 180° leicht durchfahren werden können, ohne daß die Bedienungsperson beide Hände benötigt, und wobei darüber hinaus die Grasnarbe nicht durch die unverschwenkbaren Räder verletzt wird. Die erfindungsgemäße Umrüstung ermöglicht es ferner, daß die Schnitthöhe nicht verändert wird und daß darüber hinaus eine Höhenverstellung, sofern sie an dem Handrasenmäher vorgesehen ist, nach wie vor durchgeführt werden kann. Im einzelnen sieht die Erfindung hierzu einen Umbausatz 80 vor, durch den die beiden vorderen unverschwenkbar gelagerten Laufräder 28 ersetzt werden. Der Umbausatz 80 besteht im einzelnen aus zwei Pendelradsätzen 82 und 84 mit Pendelrädern 86 und 88, die in Halterungen 90 und 92 gelagert sind, die wiederum in Rahmenteilen 94 und 96 um vertikale Achsen schwenkbar sind. Jeder Rahmenteil 94, 96 ist mit einer Öffnung 100 versehen, in der später noch zu beschreibende Komponenten aufgenommen werden können.

Jeder Pendelradsatz 82 und 84 ist mit Verbindungsteilen 106 und 108, die sich im wesentlichen in Längsrichtung erstrecken, versehen, wobei sich diese Verbindungsteile 106 und 108 in etwa über die gesamte Länge des Handrasenmähers 10 zwischen den Rahmenteilen 94 und 96, mit denen sie verbunden sind, und den entsprechenden Enden einer hinteren Achse 110 erstrecken. An den Enden 112 der Verbindungsteile 106 und 108 sind offene, U-förmig ausgebildete Schlitze 114 vorgesehen. Jeder Verbindungsteil 106 und 108 ist so ausgebildet, daß er der Kontur des Gehäuses 12 folgen kann.

Bekanntlich ist es zur Funktion eines Pendelrades wichtig, daß seine vertikale Welle senkrecht oder etwa senkrecht zu einer Auflagefläche oder der Bodenoberfläche 111 verläuft, und im Falle der Verwendung von Pendelrädern 86 und 88 an einem Handrasenmäher 10 ist es wichtig, daß im eingebauten Zustand die vertikalen Achsen 83 und 85 der Pendelräder immer senkrecht oder etwa senkrecht zur Bodenoberfläche 111 verbleiben. Um das zu erreichen, ist es wichtig, daß die Mitte oder die Achse eines jeden Laufrades 24 oder der Pendelräder 86 und 88 den gleichen Abstand von der Bodenoberfläche 111 aufweist, so daß in jeder Höhenstellung das Mähmesser 18 parallele Mähkreise mit Bezug auf die Bodenoberfläche 111 beschreibt. Durch die Verbindung der vorderen und rückwärtigen Achse über die Verbindungsteile 106 und 108 verbleiben die vertikalen Achsen 83 und 85 der beiden Pendelräder 86 und 88 immer senkrecht zu der Bodenoberfläche 111, wenn immer die Schnitthöhe geändert wird und die beiden vorderen und rückwärtigen Laufräder mit Bezug auf das Gehäuse verstellt werden.

Falls erforderlich, kann noch eine Haltestange 116 zur Verbindung zwischen den beiden Pendelradsätzen 82 und 84 vorgesehen werden, wodurch der Umbausatz im Einbau seine erforderliche Stabilität erhält und außerdem ein konstanter Abstand zwischen den Rahmenteilen 94 und 96 eingehalten wird.

Zur Vorbereitung eines herkömmlichen Handrasenmähers 10 zur Aufnahme des Umbausatzes 80 kann es noch wünschenswert sein, Nuten 120 in den beiden Enden der rückwärtigen Achse vorzusehen.

Das Verfahren zur Umrüstung eines herkömmlichen Handrasenmähers 10 mit unverschwenkbaren vorderen Laufrädern 28 in einen mit Pendelrädern nach der Erfindung erfordert in der Regel nur wenige Minuten, beispielsweise zwei. Um die Umrüstung durchzuführen, wird die rückwärtige Achse 110 etwas modifiziert, um die U-förmigen Schlitze 114 der Verbindungsteile 106 und 108 aufnehmen zu können. Dies kann in einfacher Weise dadurch gemacht werden, daß man den Durchmesser der Enden der rückwärtigen Achse reduziert, so daß sie in etwa der Höhe des Schlitzes 114 entsprechen. Andererseits ist es durchaus zweckmäßig, entsprechende Nuten 120 vorzusehen. Ist ein Handrasenmäher so modifiziert worden, dann können die linken und rechten vorderen Laufräder 28 entfernt werden, wonach die beiden Verbindungsteile 106 und 108 mit der rückwärtigen Achse durch Einführen des Schlitzes 114 über die Nut 120 verbunden werden. Danach werden die Rahmenteile 94 und 96 mit der vorderen Achse 32 durch Einführen der Endstücke 42 und 48 in die Öffnungen 100 verbunden. Selbstverständlich wird zunächst nur der Rahmenteil an einer Seite mit den entsprechenden Gegenteilen verbunden und nachfolgend der Rahmenteil an der anderen Seite. Wird die Haltestange 116 noch für erforderlich gehalten, so muß sie ebenfalls eingesetzt werden. Eine Sicherung der Haltestange sowie der Endteile der vorderen Achse 32 erfolgt über entsprechende Muttern 126. Zur Aufnahme der Haltestange 116 in den Rahmenteilen 94 und 96 sind entsprechende Öffnungen 102 vorgesehen.

Im ganzen gesehen wird hiermit ein äußerst einfacher Vorschlag zur Umrüstung eines Handrasenmähers mit unverschwenkbaren Laufrädern in einen solchen mit verschwenkbaren Laufrädern gemacht, wobei selbstverständlich ein derart umgerüsteter Handrasenmäher auch wieder schnell zurückgerüstet werden kann. Hierbei verlaufen dann die einzelnen Verfahrensschritte umgekehrt.

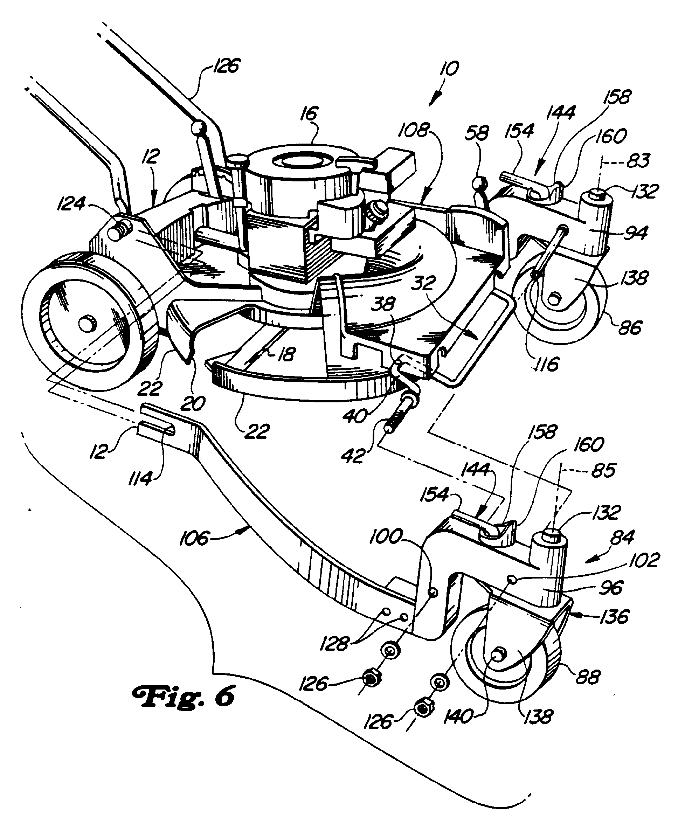

Eine weitere Ausführungsform der Erfindung ist in den Figuren 6 bis 9 dargestellt. Diese unterscheidet sich von der Ausführung nach den Figuren 2 bis 5 einmal dadurch, daß die Pendelräder 86, 88 oder nur eines der Pendelräder für Geradeausfahrt festgestellt werden können, und zum anderen dadurch, daß die Verbindungsteile 106 bzw. 108 an ihren rückwärtigen Enden auf endseitig am Handrasenmäher 10 bzw. an seinem Gehäuse 12 vorgesehene Zapfen 124 aufgesteckt werden können. Die Zapfen 124 dienen gleichzeitig zum Anschluß eines Handbügels 126, sind daher etwas länger ausgebildet als bei der Ausführung nach Fig. 2 bis 5 und können ebenfalls mit eingedrehten Nuten versehen sein. Alle anderen Teile entsprechen im wesentlichen den vorbeschriebenen Teilen nach Fig. 1 bzw. 2 bis 5.

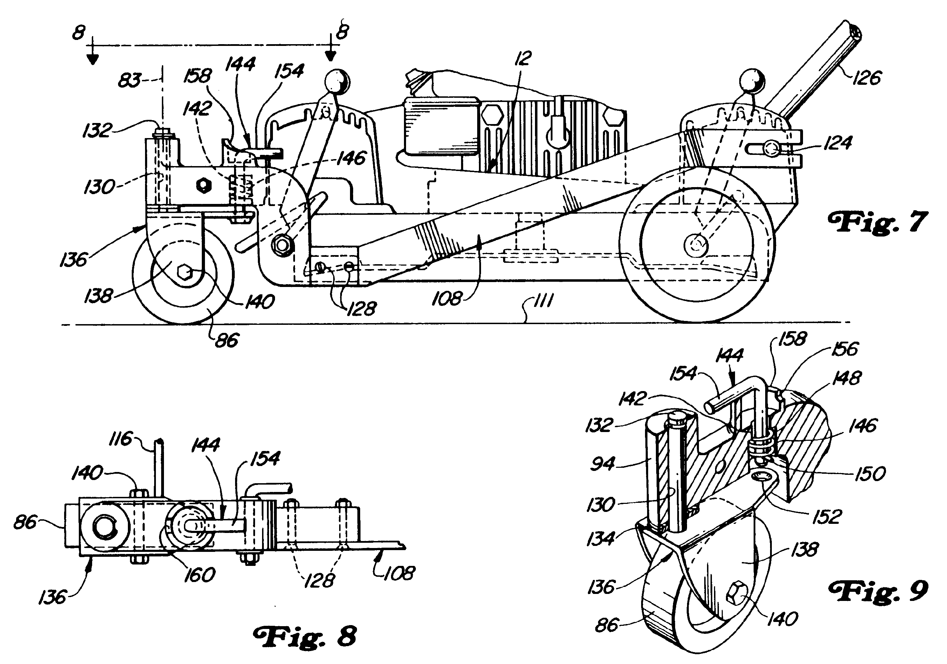

Aus Fig. 6 ist ersichtlich, daß an der rechten Seite des Handrasenmähers 10 der Pendelradsatz 84 über Schrauben 128 an dem Verbindungsteil 106 angeschlossen werden kann. In den Rahmenteil 96 des Pendelradsatzes 84 ist, wie am besten aus Fig. 9 ersehen werden kann, eine Vertikalbohrung 130 am frontseitigen Ende eingearbeitet. Diese nimmt eine Pendelachse 132 drehbar auf, die über ein Drucklager 134 gehalten und mit einem Auslegerarm 136 verbunden ist. Letzterer ist mit zwei nach unten weisenden Schenkeln 138 versehen, die eine horizontal verlaufende Radachse 140 aufnehmen. Auf der Achse 140 sind die Pendelräder 86 bzw. 88 drehbar gelagert.

Zum Feststellen der Pendelräder 86, 88 ist in jedem Rahmenteil 94 bzw. 96 hinter der Vertikalbohrung 130 etwa im Endbereich der Rahmenteile eine weitere Vertikalbohrung 142 zur Aufnahme eines zwischen einer angehobenen und einer abgesenkten Stellung verstellbaren Feststellbolzens 144 vorgesehen. Der Feststellbolzen 144 steht unter der Wirkung einer Feder 146, die den Feststellbolzen umgebend in den hierzu verbreiterten unteren Teil der Vertikalbohrung 130 eingesetzt werden kann und mit ihrer Oberseite gegen die ringförmige obere Stirnfläche 148 des verbreiterten Teils und mit ihrer Unterseite gegen einen in den Feststellbolzen 144 eingesetzten Querstift 150 anliegt. Damit hat die Feder 146 die Tendenz, den Feststellbolzen 144 nach unten in eine am Ende des Auslegerarms 136 eingearbeitete vertikale Bohrung 152 zu drücken.

In Fig. 9 befindet sich der Feststellbolzen 144 in seiner angehobenen Stellung, in der er nicht in die Bohrung 152 eingreift, und in Fig. 7 in seiner abgesenkten Stellung, in der er in die Bohrung 152 eingreift und das Pendelrad 86 bzw. 88 für Geradeausfahrt festsetzt. In beiden Stellungen kann der Feststellbolzen 144 festgelegt werden, wozu auf der Oberseite der Rahmenteile 94 bzw. 96 eine von vorne nach hinten schräg nach unten laufende Nockenfläche 158 vorgesehen ist, die eine vordere und eine rückwärtige Ausnehmung 156 und 160 zur Aufnahme des Handgriffs 154 aufweist. Die Ausnehmung 156 ist dabei an der tiefsten Stelle der Nockenfläche 158 vorgesehen, damit der Feststellbolzen 144 nach dem Einrasten des Handgriffs 144 in die Ausnehmung 156 auch noch mit ausreichender Länge durch die Bohrung 152 hindurchtreten kann, so daß das zugehörige Pendelrad gegen Pendeln festgestellt ist. Der Ausnehmung 156 gegenüberliegend ist die Ausnehmung 160 an der höchsten Stelle der Nockenfläche 158 eingearbeitet, und beim Einrasten des Handgriffs 144 in diese Ausnehmung ist die Bohrung 154 frei, und das Pendelrad 86 bzw. 88 kann frei um seine Achse 132 pendeln. Der Handgriff 154 zeigt dabei nach vorne, in den Stellungen gemäß Fig. 6 und 7, in denen das oder die Pendelräder für Geradeausfahrt festgestellt sind, dagegen nach hinten und ist so lang ausgebildet, daß er beim manuellen Verstellen auf der Nockenfläche 158 gleiten kann.

Diese Ausführungsform läßt einen Handrasenmäher noch schneller umrüsten, ohne daß Teile wie Räder abgebaut oder Umrüstsätze ausgebaut werden müßten.

## Patentansprüche

1. Handrasenmäher (10) mit einem sich auf Laufrädern (24, 86, 88) abstützenden Gehäuse (12), wobei mindestens ein in einem Rahmen montiertes Laufrad (86, 88) frei um eine zu seiner Radachse (140) senkrecht stehende Achse (83, 85, 132) pendeln kann, dadurch gekennzeichnet, daß der mit der senkrecht stehenden Achse (83, 85, 132) fest verbundene Rahmen einen Auslegerarm (136) aufweist, der feststellbar ist.

2. Handrasenmäher nach Anspruch 1, dadurch gekennzeichnet, daß in einem die senkrecht stehende Achse (83, 85, 132) aufnehmenden Rahmenteil (84, 96) ein verstellbares Feststellelement angeordnet ist, das mit dem Auslegerarm (136) verbindbar ist.

3. Handrasenmäher nach Anspruch 2, dadurch gekennzeichnet, daß das Feststellelement unter der Wirkung einer Feder (146) in seine den Auslegerarm (136) feststellende Position verstellbar ist.

4. Handrasenmäher nach Anspruch 2, dadurch gekennzeichnet, daß das Feststellelement als Feststellbolzen (144) mit Handgriff (154) ausgebildet ist, der in eine in dem Auslegerarm (136) vorgesehene Bohrung (152) unter der Wirkung der Feder (146) einrastbar und mit seinem Handgriff (154) auf einer mit dem Rahmenteil (94, 96) verbundenen schrägen Nockenfläche (158) mit Ausnehmungen (156, 160) geführt ist.

5. Handrasenmäher nach Anspruch 2 dadurch gekennzeichnet, daß jeder Rahmenteil (94, 96) über einen Verbindungsteil (106, 108) mit dem Gehäuse (12) verbindbar ist.

6. Handrasenmäher nach Anspruch 5, dadurch gekennzeichnet, daß jeder Rahmenteil (94, 96) mit einer eine Achse (32, 110) aufnehmenden Öffnung (100) versehen ist, an seinem dem Laufrad (86, 88) abgelegenen Ende mit dem Verbindungsteil (106, 108) verbunden ist und gegen ein unverschwenkbares und auf die Achse (32, 110) aufsetzbares Laufrad (24, 28) austauschbar ist.

7. Handrasenmäher nach einem oder mehreren der vorherigen Ansprüche, dadurch gekennzeichnet, daß jeder Verbindungsteil (106, 108) an seinem dem Rahmenteil (94, 96) abgelegenen Ende (112) mit einem einenends offenen, U-förmigen Schlitz (114) zur Aufnahme einer Radachse (110) versehen ist.

8. Handrasenmäher nach Anspruch 7, dadurch gekennzeichnet, daß die den Schlitz (114) aufnehmende Radachse (110) mit einer Nut (115) versehen ist.

## Claims

1. A walk-behind lawn mower (10) with a casing (12) supported on groundwheels (24, 86,88), at least one groundhweel (86,88), mounted in a frame, being capable of pivoting freely about an axis (83, 85, 132) standing vertical to its wheel axle (140), characterised in that the frame rigidly connected to the vertical axis (83, 85, 132) comprises a boom arm (136), which is securable.

2. A walk-behind lawn mower according to Claim 1, characterised in that there is disposed in a frame portion (84, 96) receiving the vertical axis (83, 85, 132) a displaceable securing member, which may be connected to the boom arm (136).

3. A walk-behind lawn mower according to Claim 2, characterised in that the securing member is displaceable, under the action of a spring (146), into the position in which it secures the boom arm (136).

4. A walk-behind lawn mower according to Claim 2, characterised in that the securing member is designed as a securing bolt (144) with a handle (154), and which can engage with a snap action into a hole (152) provided in the boom arm (136) under the action of the spring (146), and is guided with its handle (154) upon an oblique cam surface (158) connected to the frame portion (94, 96) and provided with recesses (156, 160).

5. A walk-behind lawn mower according to Claim 2, characterised in that each frame portion (94, 96) may be connected to the casing (12) by a connector piece (106, 108).

6. A walk-behind lawn mower according to Claim 5, characterised in that each frame portion (94, 96) is provided with an opening (100) receiving an axle (32, 110), is connected by its end remote from the groundwheel (86,88) with the connector piece (106, 108), and can be exchanged for a groundwheel (24, 28) which is non-pivotable and may be mounted on the axle (32, 110).

7. A walk-behind lawn mower according to one or more of the preceding Claims, characterised in that each connector piece (106, 108) is provided on its end (112) remote from the frame portion (94, 96) with a U-shaped slot ( 114 ), open at one end, for receiving a wheel axle (110).

8. A walk-behind lawn mower according to Claim 7, characterised in that the wheel axle (110) receiving the slot (114) is provided with a groove (115).

**Revendications**

1. Tondeuse à gazon (10) à avancement manuel, comprenant un carter (12) s'appuyant sur des roues (24, 86, 88) dont l'une au moins (86, 88), montée dans un support, peut pivoter librement autour d'un axe (83, 85, 132) perpendiculaire à son axe de roue (140), caractérisée en ce que le support, relié rigidement à l'axe perpendiculaire (83, 85, 132), comporte un bras en porte à faux (136) susceptible d'être bloqué.

2. Tondeuse à gazon à avancement manuel selon la revendication 1, caractérisée en ce qu'un élément de blocage déplaçable, pouvant être relié au bras en porte à faux (136), est disposé dans un support (84, 96) recevant l'axe perpendiculaire (83 85, 132).

3. Tondeuse à gazon à avancement manuel selon la revendication 2, caractérisée en ce que l'élément de blocage est déplaçable sous l'action d'un ressort (146) à sa position de blocage,du bras en porte à faux (136).

4. Tondeuse à gazon à avancement manuel selon la revendication 2, caractérisée en ce que l'élément de blocage est réalisé comme une cheville de blocage (144) pourvue d'une manette (154), qui peut être engagée en position de blocage, sous l'action du ressort (146), dans un perçage (152) prévu dans le bras en porte à faux (136) et est guidée par sa manette (154) sur une rampe (158) solidaire du support (94, 96) et présentant des crans (156, 160).

5. Tondeuse à gazon à avancement manuel selon la revendication 2, caractérisée en ce que chaque support (94, 96) peut être relié au carter (12) par l'intermédiaire d'une pièce de liaison (106, 108).

6. Tondeuse à gazon à avancement manuel selon la revendication 5, caractérisée en ce que chaque support (94, 96) est pourvu d'une ouverture (100) recevant un axe (32, 110), relié à son extrémité éloignée de la roue (86, 88) à la pièce de liaison (106, 108) et remplaçable par une roue non pivotante (24, 28) pouvant être mise en place sur l'axe (32, 110).

7. Tondeuse à gazon à avancement manuel selon une ou plusieurs des revendications précédentes, caractérisée en ce que chaque pièce de liaison (106, 108) est pourvue, à son extrémité (112) éloignée du support (94, 96), d'une fente (114) en U ouverte à une extrémité et destinée à recevoir un axe de roue (110).

8. Tondeuse à gazon à avancement manuel selon la revendication 7, caractérisée en ce que l'axe de roue (110) destiné à être engagé dans la fente (114), est pourvu d'une rainure (120).

Fig. 1

Fig. 2

Fig. 3

Fig. 4

Fig. 5

Fig. 6

**Fig. 7**

**Fig. 8**

**Fig. 9**

EP 0 367 891 B1